# EUROPÄISCHE PATENTSCHRIFT

(11) **EP 2 517 328 B1**
(45) Veröffentlichungstag und Bekanntmachung des Hinweises auf die Patenterteilung: **13.09.2017**
(21) Anmeldenummer: 09810775.8
(22) Anmeldetag: 21.12.2009
(51) Int. Cl.: G05B 19/042, H02J 13/00

(54) **ERWEITERTES ENERGIEAUTOMATISIERUNGSSYSTEM**
EXPANDED POWER AUTOMATION SYSTEM
SYSTÈME D'AUTOMATISATION ÉNERGÉTIQUE ÉLARGI

(43) Veröffentlichungstag der Anmeldung: 31.10.2012
(73) Patentinhaber: Siemens Aktiengesellschaft, 80333 München (DE)
(72) Erfinder: FÜRST, Gerhard, 90425 Nürnberg (DE); MITTER, Bernd, 91096 Möhrendorf (DE); SEIDENBECHER, Thomas, 90489 Nürnberg (DE); SEZI, Tevfik, 91052 Erlangen (DE); WAGNER, Marco, 90513 Zirndorf/Wintersdorf (DE)
(86) Internationale Anmeldenummer: PCT/EP2009/067629
(87) Internationale Veröffentlichungsnummer: WO 2011/076242

(56) Entgegenhaltungen:
- WO-A1-00/48282
- US-A- 6 005 759
- US-A1- 2007 168 590

## Beschreibung

Die Erfindung betrifft ein Energieautomatisierungssystem zum Bedienen und Beobachten eines elektrischen Energieversorgungsnetzes mit elektrischen Feldgeräten, die einerseits zur Erfassung von Messwerten mit an dem elektrischen Energieversorgungsnetz angeordneten Sensoren und andererseits mit einem übergeordneten Kommunikationsbus in Verbindung stehen, zumindest einem elektrischen Stationsleitgerät, das einerseits mit dem Kommunikationsbus und andererseits mit einer übergeordneten Leitstellenkommunikationsverbindung in Verbindung steht, und
zumindest einem elektrischen Netzleitstellengerät, das mit der Leitstellenkommunikationsverbindung in Verbindung steht, wobei die Feldgeräte, das zumindest eine Stationsleitgerät und das zumindest eine Netzleitstellengerät zur Verarbeitung von zur Bedienung und Beobachtung des elektrischen Energieversorgungsnetzes notwendigen Betriebsführungsdaten eingerichtet sind und der Kommunikationsbus und die Leitstellenkommunikationsverbindung zur Übertragung der Betriebsführungsdaten nach einem ersten Kommunikationsprotokoll oder einem ersten Datenübertragungsdienst eines bestimmten Kommunikationsprotokolls derart eingerichtet sind, dass die Betriebsführungsdaten zwischen den Feldgeräten, dem zumindest einen Stationsleitgerät und dem zumindest einen Netzleitstellengerät nach dem ersten Kommunikationsprotokoll oder dem ersten Datenübertragungsdienst des bestimmten Kommunikationsprotokolls übertragen werden.

Ein Energieautomatisierungssystem, in dem Betriebsführungsdaten als ineinander verschachtelte MODBUS- und DNP-Datenpakete übertragen werden, ist beispielsweise aus der US 6,005,759 A bekannt.

Herkömmliche Energieautomatisierungssysteme für elektrische Energieversorgungsnetze werden dazu eingesetzt, Primärkomponenten des elektrischen Energieversorgungsnetzes wie elektrische Energieversorgungsleitungen, Transformatoren, Schalter, Generatoren, Motoren und Umrichter zu steuern, zu bedienen, zu überwachen und zu schützen und dienen traditionell also zur Betriebsführung des Energieversorgungsnetzes. Hierfür sind in der Nähe der jeweiligen Primärkomponenten des Energieversorgungsnetzes sogenannte Feldgeräte vorgesehen, denen Messwerte (beispielsweise Strom- und Spannungsmesswerte, Temperaturmesswerte) zugeführt werden, die mittels Sensoren an den Primärkomponenten aufgenommen worden sind. Alternativ oder zusätzlich können Feldgeräte auch Steuerbefehle und Kommandos an Primärkomponenten des elektrischen Energieversorgungsnetzes abgeben (beispielsweise Steuerbefehle zum Öffnen eines elektrischen Leistungsschalters). Feldgeräte können hierbei Messgeräte, Leit- bzw. Steuergeräte und/oder elektrische Schutzgeräte umfassen. Beispielsweise können solche Feldgeräte in einer sogenannten Schaltstation oder einem Transformatorumspannwerk vorgesehen sein.

Zur Kommunikation untereinander und mit einem hierarchisch übergeordneten Stationsleitgerät sind die Feldgeräte über einen Kommunikationsbus, beispielsweise einem sogenannten Stationsbus, verbunden, über den sie digitale Datentelegramme übermitteln. Über den Kommunikationsbus können die Feldgeräte beispielsweise Messwerte, Meldungen und Kommandos übermitteln.

Stationsleitgeräte dienen zur Beobachtung und Bedienung des Energieversorgungsnetzes auf Schaltstationsebene. Sie zeigen dem Bedienpersonal der Schaltanlage die von den Feldgeräten empfangenen Messwerte und Meldungen an und nehmen Steuerbefehle als Eingaben vom Bedienpersonal entgegen und übermitteln diese über den Kommunikationsbus an die Feldgeräte.

Dem Stationsleitgerät ist wiederum eine hierarchische Ebene übergeordnet, die zumindest ein Netzleitstellengerät, beispielsweise eine Datenverarbeitungsanlage einer Netzleitstelle zum Steuern und Überwachen größerer Abschnitte des elektrischen Energieversorgungsnetzes, aufweist. Die Kommunikation zwischen dem Stationsleitgerät und dem Netzleitstellengerät findet über eine Leitstellenkommunikationsverbindung statt, bei der es sich wiederum um einen Datenübertragungsbus oder um andere Kommunikationsverbindungen oder Kommunikationsnetzwerke, beispielsweise ein Intranet, das Internet, eine Telekommunikationsverbindung oder eine fest verdrahtete Punkt-zu-Punkt-Verbindung handeln kann.

Hauptaufgaben eines solchen herkömmlichen Energieautomatisierungssystems liegen darin, den Betriebszustand des Energieversorgungsnetzes angebende Messwerte aufzunehmen, gegebenenfalls einer automatischen Verarbeitung zuzuführen und die Messwerte an die hierarchisch übergeordneten Ebenen, wie das Stationsleitgerät und das Netzleitstellengerät, zu übermitteln, so dass das dort arbeitende Bedienpersonal die Möglichkeit hat, möglichst schnell und effizient auf Veränderungen des Betriebszustands des elektrischen Energieversorgungsnetzes reagieren und die zur Betriebsführung notwendigen Handlungen vorzunehmen zu können. Zusammengefasst dient ein herkömmliches Energieautomatisierungssystem also der Steuerung und Überwachung eines Energieversorgungsnetzes, beispielsweise einer Schaltanlage des Energieversorgungsnetzes. Dabei werden Informationen über den Zustand des Energieversorgungsnetzes an den Primärkomponenten, beispielsweise über die aufgenommenen Messwerte, erfasst, verarbeitet und an Stationsleitgeräte bzw. Netzleitstellengeräte weitergeleitet. Weiterhin werden Befehle des Bedienpersonals aus der Stations- und/oder Netzleitstelle entgegengenommen bzw. werden Kommandos automatisch generiert, um den Zustand der Primärkomponenten des elektrischen Energieversorgungsnetzes zu beeinflussen. Bei einem herkömmlichen Energieautomatisierungssystem liegt der Fokus daher auf Betriebssicherheit. Außerdem muss das System ständig verfügbar sein, um den jeweils aktuellen Zustand des Energieversorgungsnetzes wiederzugeben.

Um diesen Anforderungen gerecht zu werden, sind die verwendeten Geräte bzw. die Kommunikationsinfrastruktur eines herkömmlichen Energieautomatisierungssystems daraufhin angepasst worden, einen zuverlässigen Betrieb zu gewährleisten, d. h. die Messdaten und Meldungen möglichst zeitnah der Stationsleitstelle bzw. der Netzleitstelle zuführen zu können und Steuerbefehle und automatische Kommandos zuverlässig an die betreffenden Primärkomponenten weiterzuleiten. Messdaten, Meldungen, Steuerbefehle und Kommandos werden im Folgenden zusammengefasst als Betriebsführungsdaten bezeichnet. Betriebsführungsdaten kennzeichnen sich üblicherweise durch eine geringe Datenmenge (wenige Byte) aus, müssen aber zeitnah übertragen werden. Zur Übertragung der Betriebsführungsdaten umfasst die Kommunikationssoftware von Feldgeräten, Stationsleitgeräten und Netzleitstellengeräten ein geeignetes Kommunikationsprotokoll oder einen geeigneten Datenübertragungsdienst eines bestimmten Kommunikationsprotokolls, die jeweils angeben, wie die einzelnen Geräte untereinander Datentelegramme der Betriebsführungsdaten austauschen. Bei einem Kommunikationsprotokoll handelt es sich um ein umfassendes Regelwerk zur Festlegung der Kommunikationsmechanismen. Beispiele für Kommunikationsprotokolls sind die IEC60860-5-103, -104 oder auch IEC61850, die jeweils Mechanismen zur Übertragung von Daten in elektrischen Schaltanlagen definieren. Ein Kommunikationsprotokoll kann verschiedene Datenübertragungsdienste umfassen, also voneinander getrennte Regelwerke zur Übertragung von Daten.

Das zur Übertragung der Betriebsführungsdaten verwendete Kommunikationsprotokoll bzw. der verwendete Datenübertragungsdienst sind entsprechend für den Betrieb des Energieautomatisierungssystems angepasst. Beispielsweise ist vorgesehen, dass aufgenommene Messwerte unverzüglich an hierarchisch übergeordnete Ebenen des Energieautomatisierungssystems weitergeleitet werden bzw. dass Steuerbefehle und Kommandos ebenfalls unverzüglich und mit hoher Priorität an die entsprechenden Feldgeräte zur Beeinflussung der Primärkomponenten übermittelt werden. Bei der Übertragung der Messwerte dürfen hierbei in vertretbarem Umfang Verluste bzw. Fehlübertragungen auftreten, solange jedoch gewährleistet ist, dass die empfangenen Geräte über die Verluste bzw. Fehlübertragungen informiert werden und die davon betroffenen Messwerte in akzeptabler Zeit nachgeliefert werden. Auf der anderen Seite muss jedoch gewährleistet sein, dass eine zur Steuerung und Überwachung des Energieversorgungsnetzes benötigte Mindestmenge an Messwerten korrekt an die übergeordneten Hierarchieebenen, also das Stationsleitgerät bzw. das Netzleitstellengerät, weitergeleitet wird. Steuerbefehle und Kommandos müssen hingegen auf jeden Fall vollständig übertragen werden. Der Erfindung liegt die Aufgabe zugrunde, den Funktionsumfang eines Energieautomatisierungssystems zu erweitern, ohne hierbei die Funktionalität des Energieautomatisierungssystems, insbesondere hinsichtlich Betriebssicherheit, Verfügbarkeit und Zuverlässigkeit, zu beeinträchtigen. Die vorliegende Erfindung löst die Aufgabe durch ein Energieautomatisierungssystem entsprechend dem unabhängigen Anspruch 1. Weitere erfindungsgemäße Ausgestaltungen werden durch die abhängigen Ansprüche offenbart.

Zur Lösung dieser Aufgabe wird vorgeschlagen, dass die Feldgeräte, das zumindest eine Stationsleitgerät und das zumindest eine Netzleitstellengerät zur Verarbeitung von die Elektroenergiequalität des elektrischen Energieversorgungsnetzes angebenden Elektroenergiequalitätsdaten eingerichtet sind und der Kommunikationsbus und die Leitstellenkommunikationsverbindung zur Übertragung der Elektroenergiequalitätsdaten nach einem zweiten Kommunikationsprotokoll, das von dem ersten Kommunikationsprotokoll verschieden ist, oder einem zweiten Datenübertragungsdienst des bestimmten Kommunikationsprotokolls, der von dem ersten Datenübertragungsdienst verschieden ist, derart eingerichtet sind, dass die Elektroenergiequalitätsdaten zwischen den Feldgeräten, dem zumindest einen Stationsleitgerät und dem zumindest einen Netzleitstellengerät nach dem zweiten Kommunikationsprotokoll oder dem zweiten Datenübertragungsdienst des bestimmten Kommunikationsprotokolls übertragen werden. Es wird also ein erweitertes Energieautomatisierungssystem mit einem zusätzlichen Funktionsumfang angegeben, das neben den Betriebsführungsfunktionen eines herkömmlichen Energieautomatisierungssystems zusätzliche Funktionen zur Erfassung und Weiterleitung von die Elektroenergiequalität des elektrischen Energieversorgungsnetzes angebenden Elektroenergiequalitätsdaten umfasst. Diese Funktionen wurden in der Vergangenheit stets mit separaten Mess- und Kommunikationsübertragungseinrichtungen erfüllt, da an ein herkömmliches Energieautomatisierungssystem und ein System zur Überwachung der Elektroenergiequalität höchst unterschiedliche Anforderungen gestellt werden. Während - wie bereits erläutert - Anforderungen an ein herkömmliches Energieautomatisierungssystem insbesondere dessen Betriebssicherheit und Verfügbarkeit sind, dient ein System zur Überwachung der Elektroenergiequalität zur Erfassung und Auswertung von Elektroenergiequalitätsdaten des Energieversorgungsnetzes, die zur Beurteilung von dessen Elektroenergiequalität geeignet sind (beispielsweise Strom, Spannung, Frequenz, Leistung). Bei einem System zur Überwachung der Elektroenergiequalität liegt der Fokus auf einer vollständigen Erfassung von Daten über einen langen Zeitraum hinweg. Dabei ist es von entscheidender Bedeutung, dass es nicht zu Lücken in der Aufzeichnung der Elektroenergiequalitätsdaten kommt; es dürfen also keine Elektroenergiequalitätsdaten verloren gehen. Im Gegensatz zur Betriebsführung spielt dabei hingegen eine schnelle Bearbeitung der Elektroenergiequalitätsdaten keine entscheidende Rolle.

Diese höchst unterschiedlichen Anforderungen an die Betriebsführung und ein System zur Überwachung der Elektroenergiequalität eines elektrischen Energieversorgungsnetzes spiegeln sich auch an der Datenmenge der hierfür zu übermittelnden Daten wider: Während zur Betriebsführung Messwerte und Meldungen in einer Größenordnung von 10 bis 20 Bytes übertragen werden müssen, ist das bei einem System zur Überwachung der Elektroenergiequalität zu übertragende Datenvolumen im Bereich einiger Megabytes bis einiger Gigabytes angesiedelt, da viele Messwerte übertragen werden müssen und die Übertragung mit absoluter Vollständigkeit erfolgen muss.

Um diese unterschiedlichen Anforderungen mit einem einzigen erweiterten Energieautomatisierungssystem erfüllen zu können, ist daher erfindungsgemäß vorgesehen, die die Elektroenergiequalität beschreibenden Elektroenergiequalitätsdaten gemäß einem zweiten Kommunikationsprotokoll, das von dem ersten Kommunikationsprotokoll verschieden ist, bzw. einem zweiten Datenübertragungsdienst des bestimmten Kommunikationsprotokolls, der von dem ersten Datenübertragungsdienst verschieden ist, zu übertragen. Es kann also ein gänzlich anderes Kommunikationsprotokoll verwendet werden. Alternativ kann auch ein unter demselben Kommunikationsprotokoll definierter zweiter Datenübertragungsdienst für die Elektroenergiequalitätsdaten verwendet werden. Beispielsweise kann ein solches zweites Kommunikationsprotokoll bzw. ein solcher zweiter Datenübertragungsdienst vorsehen, dass diejenigen Feldgeräte, die Messwerte zur Beurteilung der Elektroenergiequalität des elektrischen Energieversorgungsnetzes aufnehmen, die Messwerte zunächst über einen längeren Zeitraum aufnehmen und zwischenspeichern. Erst nach Ablauf einer vorgegebenen Zeitdauer, beispielsweise einige Minuten bis einige Stunden, werden die Messwerte dann als Elektroenergiequalitätsdaten an die hierarchisch übergeordneten Ebenen übertragen werden. Ebenso kann vorgesehen sein, dass eine Übertragung der Elektroenergiequalitätsdaten nur dann stattfindet, wenn die sonstige Belastung des Kommunikationsbusses und/oder der Leitstellenkommunikationsverbindung vergleichsweise gering ist, also unter einer definierten Belastungsschwelle liegt. Die Verzögerung, mit der die Elektroenergiequalitätsdaten an das Stationsleitgerät bzw. das Netzleitstellengerät übermittelt werden, spielt im Normalfall keine besondere Rolle, da die Auswertung solcher Elektroenergiequalitätsdaten hinsichtlich einer sicheren Betriebsführung des elektrischen Energieversorgungsnetzes nicht als kritisch anzusehen ist und daher auch einige Zeit nach der Erfassung der jeweiligen Elektroenergiequalitätsdaten durchgeführt werden kann. Außerdem benötigt eine manuelle und/oder automatische Auswertung der großen Datenmengen von Elektroenergiequalitätsdaten üblicherweise eine längere Zeit als die Reaktion auf Änderungen der Betriebsführungsdaten.

Durch die Verwendung unterschiedlicher Kommunikationsprotokolle bzw. Datenübertragungsdienste für die Betriebsführungsdaten einerseits und die Elektroenergiequalitätsdaten andererseits werden zwischen den einzelnen Geräten des erweiterten Energieautomatisierungssystems quasi über ein- und dieselbe physikalische Datenverbindung mehrere unterschiedliche logische Kommunikationsverbindungen definiert, so dass die Übertragung der Betriebsführungsdaten und der Elektroenergiequalitätsdaten streng getrennt auf diesen unterschiedlichen Kommunikationsverbindungen stattfindet.

Eine vorteilhafte Ausführungsform des erweiterten Energieautomatisierungssystems sieht vor, dass die Betriebsführungsdaten über den Kommunikationsbus und die Leitstellenkommunikationsverbindung mit einer höheren Priorität übertragen werden als die Elektroenergiequalitätsdaten. Hierdurch kann zu jedem Zeitpunkt gewährleistet werden, dass bei gleichzeitigem Vorliegen von Betriebsführungsdaten und Elektroenergiequalitätsdaten, die über dieselbe physikalische Kommunikationsverbindung zu übertragen sind und dessen Übertragungsbandbreite in Anspruch nehmen, immer die Betriebsführungsdaten zuerst übertragen werden, um eine zeitnahe Information des Bedienpersonals über Änderungen der Betriebsführungsdaten zu ermöglichen. Auf diese Weise kann das Bedienpersonal zügig auf kritische Änderungen reagieren und entsprechende Steuerbefehle in das Stationsleitgerät bzw. das Netzleitstellengerät eingeben.

Eine weitere vorteilhafte Ausführungsform des erweiterten Energieautomatisierungssystems sieht vor, dass die Feldgeräte, das zumindest eine Stationsleitgerät und das zumindest eine Netzleitstellengerät auch zur Verarbeitung von eine Störung in dem elektrischen Energieversorgungsnetz angebenden Störschriebdaten eingerichtet sind und der Kommunikationsbus und die Leitstellenkommunikationsverbindung auch zur Übertragung der Störschriebdaten nach einem dritten Kommunikationsprotokoll, das von dem ersten und dem zweiten Kommunikationsprotokoll verschieden ist, oder einem dritten Datenübertragungsdienst, der von dem ersten und dem zweiten Datenübertragungsdienst verschieden ist, eingerichtet sind.

Hierdurch wird der Funktionsumfang des erweiterten Energieautomatisierungssystems sozusagen nochmals erweitert, indem nunmehr auch Störschriebdaten, die üblicherweise Verläufe von Strom- und Spannungsmesswerten während einer von den Feldgeräten erkannten Störung (beispielsweise einem in dem Energieversorgungsnetz aufgetretenen Kurzschluss) aufgenommen worden sind, verarbeitet und an die hierarchisch übergeordneten Stellen übertragen werden können. Es findet damit die Etablierung einer dritten logischen Kommunikationsverbindung über dieselbe physikalische Kommunikationsverbindung statt, über die somit die Betriebsführungsdaten, die Elektroenergiequalitätsdaten und die Störschriebdaten übertragen werden können.

Die Auswertung der Störschriebdaten und gegebenenfalls nötige Reaktionen können durchaus eine längere Zeitdauer benötigen als die Reaktion auf Betriebsführungsdaten. Dennoch sollte eine Bereitstellung der Störschriebdaten möglichst innerhalb weniger Minuten erfolgt sein. Daher ist gemäß einer weiteren vorteilhaften Ausführungsform des erfindungsgemäßen erweiterten Energieautomatisierungssystems vorgesehen, dass die Betriebsführungsdaten über den Kommunikationsbus und die Leitstellenkommunikationsverbindung mit einer höheren Priorität übertragen werden als die Störschriebdaten, während die Störschriebdaten ihrerseits über den Kommunikationsbus und die Leitstellenkommunikationsverbindung mit einer höheren Priorität übertragen werden als die Elektroenergiequalitätsdaten.

Eine weitere vorteilhafte Ausführungsform des erweiterten Energieautomatisierungssystems sieht vor, dass die Feldgeräte zur Erfassung von Messwerten und zum Ermitteln der Elektroenergiequalitätsdaten aus den Messwerten eingerichtet sind, indem die Messwerte und/oder von den Messwerten abgeleitete Werte über einen vorgegebenen Zeitraum fortlaufend abgespeichert werden, und die Feldgeräte zur blockweisen Übertragung des Verlaufs der Messwerte und/oder der abgeleiteten Werte als Elektroenergiequalitätsdaten über den Kommunikationsbus eingerichtet sind.

Hierdurch kann gewährleistet werden, dass die Elektroenergiequalitätsdaten nicht sofort nach ihrer Erfassung übertragen werden und so nicht die Kommunikationslast auf dem Kommunikationsbus bzw. der Leitstellenkommunikationsverbindung kontinuierlich erhöhen.

Eine weitere vorteilhafte Ausführungsform des Energieautomatisierungssystems sieht zudem vor, dass die Feldgeräte dazu eingerichtet sind, die Betriebsführungsdaten unverzüglich über den Kommunikationsbus zu übertragen und/oder über den Kommunikationsbus empfangene Betriebsführungsdaten unverzüglich an das elektrische Energieversorgungsnetz weiterzuleiten.
Hierdurch wird die Betriebssicherheit des Energieautomatisierungssystems gewährleistet, indem die Betriebsführungsdaten in jedem Fall unverzüglich übertragen werden.

Schließlich sieht eine weitere vorteilhafte Ausführungsform des Energieautomatisierungssystems vor, dass mit dem Kommunikationsbus und/oder der Leitstellenkommunikationsverbindung eine Datenspeichereinrichtung in Verbindung steht, die zum Empfang und zum Abspeichern der Elektroenergiequalitätsdaten eingerichtet ist.

Hierdurch wird eine Möglichkeit geschaffen, die Elektroenergiequalitätsdaten direkt einer Archivierung zuführen zu können und sie über die Datenspeichereinrichtungen für eine weitere Auswertung und Analyse bereithalten zu können. Die Datenspeichereinrichtungen können hierbei separat oder als Bestandteil des Stationsleitgerätes bzw. des Netzleitstellengerätes ausgeführt sein.

Die Erfindung soll im Folgenden anhand eines Ausführungsbeispiels näher erläutert werden. Hierzu zeigt die
- Figur: eine schematische Ansicht eines erweiterten Energieautomatisierungssystems.

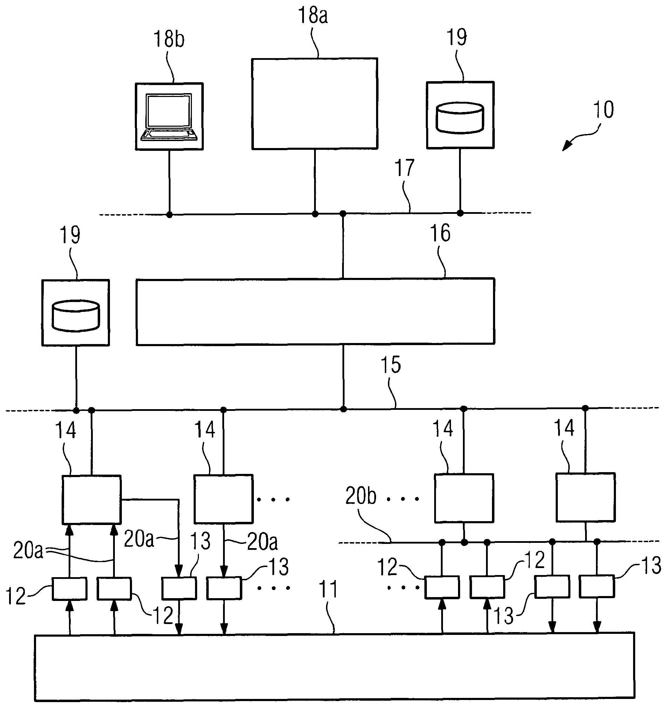

Die Figur zeigt ein erweitertes Energieautomatisierungssystem 10 (im Folgenden der Einfachheit halber auch lediglich als "Energieautomatisierungssystem" bezeichnet) zum Bedienen und Beobachten eines lediglich schematisch angedeuteten Energieversorgungsnetzes 11. Bei dem Energieversorgungsnetz 11 kann es sich um ein vollständiges Energieversorgungsnetz oder um einen Teil eines elektrischen Energieversorgungsnetzes, beispielsweise eine Schaltstation, handeln. Mit Sensoren 12, beispielsweise Strom- oder Spannungswandlern, werden Messwerte, die zur Beschreibung des Zustandes des elektrischen Energieversorgungsnetzes 11 geeignet sind, aufgenommen. Aktoren 13, beispielsweise Steuerungen für elektrische Schalter in dem Energieversorgungsnetz 11, dienen zur Weitergabe von Kommandos und Steuerbefehlen an die Primärkomponenten des elektrischen Energieversorgungsnetzes 11.

Die Sensoren 12 und die Aktoren 13 sind mit Feldgeräten 14 verbunden. Bei den Feldgeräten kann es sich beispielsweise um allgemeine Messgeräte zur Erfassung und Verarbeitung der mittels der Sensoren aufgenommenen Messwerte, um elektrische Schutzgeräte zur automatischen Auswertung der aufgenommenen Messwerte und zur automatischen Generierung von Kommandos, um Steuergeräte zur Weitergabe von Steuerbefehlen an die Aktoren 13 oder um Elektroenergiequalitätsrekorder zur Aufnahme von für die Beurteilung der Elektroenergiequalität des elektrischen Energieversorgungsnetzes relevanten Messwerte handeln. Die Verbindung zwischen den Sensoren 12 und Aktoren 13 und den Feldgeräten 14 kann beispielsweise durch eine feste Verdrahtung 20a oder über einen sogenannten Prozessbus 20b, über den digitale Datentelegramme übermittelt werden, erfolgen.

Die Feldgeräte 14 stehen außerdem mit einem übergeordneten Kommunikationsbus 15, beispielsweise einem Stationsbus, in Verbindung, der zur Übertragung von Datentelegrammen zwischen den Feldgeräten 14 und zumindest einem Stationsleitgerät 16 dient. Das Stationsleitgerät 16 dient zur Steuerung und Überwachung des elektrischen Energieversorgungsnetzes 11 auf der Ebene der Schaltstation und bringt daher dem Bedienpersonal vor Ort Verläufe von Messwerten und Meldungen zur Anzeige und nimmt Steuerbefehle zur Betriebsführung des Energieversorgungsnetzes 11 entgegen.

Das Stationsleitgerät 16 ist über eine Leitstellenkommunikationsverbindung 17 mit zumindest einem Netzleitstellengerät 18a verbunden, das zur Steuerung und Überwachung des elektrischen Energieversorgungsnetzes 11 auf der Ebene einer Netzleitstelle dient. Das Netzleitstellengerät 18a kann hierbei beispielsweise durch eine Datenverarbeitungsanlage einer Netzleitstelle (auch als Control Center bezeichnet) gebildet sein. Zusätzlich zu dem Netzleitstellengerät 18a kann auch eine weitere mit der Leitstellenkommunikationsverbindung 17 in Verbindung stehende Datenverarbeitungseinrichtung 18b, beispielsweise ein Laptop, der temporär mit der Leitstellenkommunikationsverbindung 17 in Verbindung gebracht werden kann, gebildet sein.

Weiterhin können mit dem Kommunikationsbus 15 oder der Leitstellenkommunikationsverbindung 17 Datenspeichereinrichtungen 19 in Verbindung stehen.

Das in der Figur gezeigte Energieautomatisierungssystem 10 übernimmt gleichzeitig die Betriebsführungsfunktionalitäten eines herkömmlichen Energieautomatisierungssystems sowie diejenigen Funktionalitäten eines Systems zur Überwachung der Elektronenergiequalität des elektrischen Energieversorgungsnetzes. Während die Anforderungen an die Betriebsführung des elektrischen Energieversorgungsnetzes 11 insbesondere dessen Betriebssicherheit, Zuverlässigkeit und Verfügbarkeit sind, liegt die wesentliche Anforderung an ein System zur Überwachung der Elektroenergiequalität in der vollständigen Aufzeichnung und Abspeicherung der zur Beurteilung der Elektroenergiequalität relevanten Messwerte.

Um mit einem einzigen Energieautomatisierungssystem gleichzeitig diesen unterschiedlichen Anforderungen gerecht zu werden, sind die Feldgeräte 14, das zumindest eine Stationsleitgerät 16 sowie das zumindest eine Netzleitstellengerät 18a bzw. 18b zur Verarbeitung einerseits von Betriebsführungsdaten und andererseits von Elektroenergiequalitätsdaten eingerichtet. Unter Betriebsführungsdaten sind Messwerte, die zur Beurteilung des allgemeinen Betriebszustandes des elektrischen Energieversorgungsnetzes 11 geeignet sind, aus den Messwerten abgeleitete Meldungen (z.B. bezüglich der Überschreitung eines Schwellenwertes), sowie automatisch (z.B. von Schutzgeräten) generierte Kommandos bzw. von dem Bedienpersonal zur Betriebsführung des elektrischen Energieversorgungsnetzes eingegebene Steuerbefehle zu verstehen. Zur Beurteilung des Zustands des elektrischen Energieversorgungsnetzes geeignete Messwerte können in diesem Zusammenhang insbesondere Strom- und Spannungsmesswerte, die mit den Sensoren 12 an Primärkomponenten des elektrischen Energieversorgungsnetzes aufgenommen worden sind, aber beispielsweise auch Temperaturmesswerte, die an einem Transformator des elektrischen Energieversorgungsnetzes aufgenommen worden sind, angesehen werden. Diese im Rahmen der Betriebsführung des elektrischen Energieversorgungsnetzes relevanten Messwerte werden von den Feldgeräten erfasst und gegebenenfalls einer Vorverarbeitung zugeführt. Im Rahmen dieser Vorverarbeitung kann z.B. eine digitale Filterung von Messwerten, eine Leistungsberechnung oder eine Strom- und Spannungszeigerberechnung, erfolgen. Außerdem können die Feldgeräte bereits eine Verarbeitung in Form einer automatischen Auswertung der aufgenommenen Messwerte durchführen, um beispielsweise aus den Messwerten bestimmte Meldungen abzuleiten oder unzulässige Betriebszustände bereits auf der Ebene der Feldgeräte erkennen zu können und entsprechende Gegenmaßnahmen, insbesondere in Form von Auslösekommandos für elektrische Leistungsschalter, zu erzeugen. Die letztgenannten automatischen Auswertungsfunktionen werden üblicherweise von Feldgeräten in Form von elektrischen Schutzgeräten wahrgenommen. Neben solchen automatisch von den Feldgeräten generierten Kommandos werden an die Aktoren 13 auch von dem Stationsleitgerät 16 bzw. dem Netzleitstellengerät 18a bzw. 18b durch Benutzereingaben erzeugte Steuerbefehle übermittelt, die von den Aktoren 13, beispielsweise Steuerungen von Trennschaltern oder Stufenschaltern eines Transformators, an die Primärkomponenten des elektrischen Energieversorgungsnetzes weitergegeben werden.

Bei den zur Beurteilung der Elektroenergiequalität des elektrischen Energieversorgungsnetzes 11 geeigneten Messwerten, die ebenfalls von den Sensoren 12 aufgenommen werden, kann es sich um Strom- und Spannungsmesswerte handeln. Im Rahmen der Vorverarbeitung in den elektrischen Feldgeräten 14 können aus solchen Strom- und Spannungsmesswerten bereits abgeleitete Werte wie Wirk- und Blindleistungswerte, Frequenzwerte, Werte, die Angaben über Oberschwingungen (teilweise bis über die 50. harmonische Oberschwingung hinaus) der Messwerte machen, und andere zur Beurteilung der Elektroenergiequalität des Energieversorgungsnetzes 11 geeignete abgeleitete Werte gebildet werden. Solche zur Beurteilung der Elektroenergiequalität geeigneten Messwerte und abgeleiteten Werte müssen an die Datenspeicher 19 und/oder das Stationsleitgerät 16 bzw. das Netzleitstellengerät 18a, 18b weitergeleitet werden, um dort für eine weitere Analyse bereitzustehen.

Während zur Betriebsführung vergleichsweise wenige Daten (Strom- und Spannungsmesswerte, ggf. Leistungswerte) übertragen werden müssen und die Betriebsführungsdaten daher eine geringe Datengröße aufweisen und unverzüglich an das Energieautomatisierungssystem übermittelt werden müssen, kann eine Übermittlung der Elektroenergiequalitätsdaten, die aufgrund der hohen Anzahl von Messwerten und davon abgeleiteten Werten eine größere Datenmenge umfassen, auch mit einer gewissen Verzögerung stattfinden. Es bietet sich beispielsweise an, Elektroenergiequalitätsdaten blockweise zu übermitteln, d. h., dass zunächst eine Weile lang Messwerte von einem Feldgerät 14 aufgenommen und solange zwischengespeichert werden, bis eine bestimmte Datenmenge erreicht worden ist oder eine bestimmte Zeitdauer abgelaufen ist und die auf diese Weise gesammelten Elektroenergiequalitätsdaten dann in einem Block an die Datenspeicher 19 und/oder das Stationsleitgerät 16 bzw. das Netzleitstellengerät 18a, 18b übertragen werden.

Zu diesen unterschiedlichen Zwecken ist vorgesehen, dass in dem Energieautomatisierungssystem 10 die Betriebsführungsdaten nach einem ersten Kommunikationsprotokoll bzw. einem ersten Datenübertragungsdienst eines bestimmten Kommunikationsprotokolls und die Elektroenergiequalitätsdaten nach einem zweiten Kommunikationsprotokoll, das von dem ersten Kommunikationsprotokoll verschiedenen ist, bzw. einem zweiten Datenübertragungsdienst des bestimmten Kommunikationsprotokolls, der von dem ersten Datenübertragungsdienst verschiedenen ist, übertragen werden.
Bei einem Kommunikationsprotokoll handelt es sich um ein umfassendes Regelwerk zur Festlegung der Kommunikationsmechanismen. Ein Kommunikationsprotokoll kann verschiedene Datenübertragungsdienste umfassen, also voneinander getrennte Regelwerke zur Übertragung von Daten. Die Betriebsführungsdaten einerseits und die Elektroenergiequalitätsdaten andererseits können also entweder nach vollkommen unterschiedlichen Kommunikationsprotokollen oder nach unterschiedlichen Datenübertragungsdiensten eines bestimmten Kommunikationsprotokolls, beispielsweise einem durch die IEC 61850 definierten Kommunikationsprotokoll, übertragen werden. Wichtig ist, dass für die unterschiedlichen Daten unterschiedliche Kommunikationsregeln verwendet werden, um eine Trennung beider logischen Kommunikationswege zu ermöglichen.

Das Kommunikationsprotokoll bzw. der Datenübertragungsdienst für die Betriebsführungsdaten kann hierbei vorsehen, dass die Betriebsführungsdaten unverzüglich nach ihrer Erfassung und mit der höchsten Priorität über den Kommunikationsbus 15 bzw. die Leitstellenkommunikationsverbindung 17 übertragen werden. Aufgrund der geringen Datenmenge der Betriebsführungsdaten kann das erste Kommunikationsprotokoll bzw. der erste Datenübertragungsdienst insbesondere für kleinere Dateigrößen geeignet sein, die Fehlertoleranz des ersten Kommunikationsprotokolls bzw. des ersten Datenübertragungsdienstes kann derart bemessen sein, dass zwar Verluste und Fehlübertragungen einer bestimmten Anzahl von Messwerten erlaubt ist, diese aber gemeldet werden müssen und möglichst zeitnah nachgeliefert werden. Insgesamt muss sichergestellt sein, dass innerhalb einer kürzest möglichen Zeit die zur Betriebsführung des elektrischen Energieversorgungsnetzes notwendige Mindestmenge von Messwerten an das Stationsleitgerät 16 bzw. das Netzleitstellengerät 18a, 18b übermittelt wird. Steuerbefehle und automatisch generierte Kommandos hingegen müssen mit höchster Zuverlässigkeit an den jeweiligen Empfänger übertragen werden, so dass das erste Kommunikationsprotokoll bzw. der erste Datenübertragungsdienst hierbei beispielsweise Redundantkonzepte wie eine mehrfache (redundante) Übertragung der Steuerbefehle bzw. Kommandos und/oder eine Befehlsquittierung durch den jeweiligen Empfänger vorsieht.

Das zweite Kommunikationsprotokoll bzw. der zweite Datenübertragungsdienst zur Übertragung der Elektroenergiequalitätsdaten sollte hingegen derart ausgestaltet sein, dass eine Übertragung von größeren Datenmengen in blockweiser Übertragung ermöglicht wird. Die Elektroenergiequalitätsdaten besitzen hierbei zwar die niedrigste Übertragungspriorität bezüglich des Kommunikationsbusses 15 und der Leitstellenkommunikationsverbindung 17, müssen dafür aber absolut vollständig übertragen werden, so dass keine Lücken in den übertragenden Messwertverläufen auftreten. Daher muss das Kommunikationsprotokoll bzw. der Datenübertragungsdienst hierfür beispielsweise sicherstellen, dass unterbrochene oder gestörte Kommunikationsübertragungen wiederholt bzw. an der richtigen Stelle fortgesetzt werden. Die Übertragungszeit hinsichtlich der Elektroenergiequalitätsdaten spielt jedoch eine untergeordnete Rolle, da die Auswertung dieser Daten ohnehin ein langwieriger Prozess ist und eine Veränderung der Elektroenergiequalität keine unmittelbare Reaktion des Bedienpersonals des elektrischen Energieversorgungsnetzes erfordert. Während der Zeitrahmen für eine Reaktion hinsichtlich Änderungen der Betriebsführungsdaten im Bereich weniger Sekunden liegt, kann eine Analyse von Elektroenergiequalitätsdaten und eine Reaktion auf Veränderungen der Elektroenergiequalitätsdaten im Bereich einiger Minuten bis einiger Stunden erfolgen.

Durch die verschiedenen Kommunikationsprotokolle bzw. Datenübertragungsdienste werden über dieselbe physikalische Datenverbindung, also den Kommunikationsbus 15 und die Leitstellenkommunikationsverbindung 17, sozusagen mehrere logische Kommunikationsverbindungen etabliert, die strikt voneinander getrennt werden müssen, um einerseits Zuverlässigkeit und Betriebssicherheit hinsichtlich der Betriebsführung zu gewährleisten und andererseits die vollständige Übertragung der Elektroenergiequalitätsdaten zu ermöglichen. Beispielsweise kann vorgesehen sein, dass die Elektroenergiequalitätsdaten nur dann über den Kommunikationsbus 15 bzw. die Leitstellenkommunikationsverbindung 17 übertragen werden, wenn deren Kommunikationsauslastung vergleichsweise niedrig ist.

Zusätzlich kann auch vorgesehen sein, dass mit den Feldgeräten sogenannte Störschriebe, d. h. Verläufe von Messwerten während einer von den Feldgeräten automatisch erkannten Störung in dem elektrischen Energieversorgungsnetz 11 aufgenommen werden und die entsprechenden Störschriebdaten gemäß einem dritten Kommunikationsprotokoll bzw. einem dritten Datenübertragungsdienst an das Stationsleitgerät 15 bzw. das Netzleitstellengerät 18 übertragen werden. Solche Störschriebe liegen üblicherweise in einem Bereich von etwa 10 Kilobytes bis 400 Megabytes und sollten mit einer Priorität unterhalb der Betriebsführungsdaten, aber oberhalb der Elektroenergiequalitätsdaten, übertragen werden, da sie eine Reaktion innerhalb einiger Minuten erfordern.

Mit dem in der Figur dargestellten Energieautomatisierungssystem 10 können daher Funktionen der Betriebsführung des elektrischen Energieversorgungsnetzes 11, Funktionen zur Überwachung der Elektroenergiequalität und gegebenenfalls auch Funktionen zur Analyse von Störschriebaufzeichnungen durchgeführt werden, ohne dass zusätzliche Geräteinstallationen notwendig sind. Dadurch, dass die Infrastruktur eines gegebenenfalls bereits bestehenden Energieautomatisierungssystems weitgehend mitgenutzt werden kann, entstehen dem Betreiber des elektrischen Energieversorgungsnetzes durch ein solches Energieautomatisierungssystem keine zusätzlichen Kosten.

## Patentansprüche

1. Energieautomatisierungssystem (10) zum Bedienen und Beobachten eines elektrischen Energieversorgungsnetzes (11) mit
- elektrischen Feldgeräten (14), die einerseits zur Erfassung von Messwerten mit an dem elektrischen Energieversorgungsnetz (11) angeordneten Sensoren (12) und andererseits mit einem übergeordneten Kommunikationsbus (15) in Verbindung stehen;
- zumindest einem elektrischen Stationsleitgerät (16), das einerseits mit dem Kommunikationsbus (15) und andererseits mit einer übergeordneten Leitstellenkommunikationsverbindung (17) in Verbindung steht; und
- zumindest einem elektrischen Netzleitstellengerät (18a, 18b), das mit dem Leitstellenkommunikationsverbindung (17) in Verbindung steht; wobei
- die Feldgeräte (14), das zumindest eine Stationsleitgerät (16) und das zumindest eine Netzleitstellengerät (18a, 18b) zur Verarbeitung von zur Bedienung und Beobachtung des elektrischen Energieversorgungsnetzes (11) notwendigen Betriebsführungsdaten eingerichtet sind und der Kommunikationsbus (15) und die Leitstellenkommunikationsverbindung (17) zur Übertragung der Betriebsführungsdaten nach einem ersten Kommunikationsprotokoll oder einem ersten Datenübertragungsdienst eines bestimmten Kommunikationsprotokolls derart eingerichtet sind, dass die Betriebsführungsdaten zwischen den Feldgeräten (14), dem zumindest einen Stationsleitgerät (16) und dem zumindest einen Netzleitstellengerät (18a, 18b) nach dem ersten Kommunikationsprotokoll oder dem ersten Datenübertragungsdienst des bestimmten Kommunikationsprotokolls übertragen werden; wobei
- die Feldgeräte (14), das zumindest eine Stationsleitgerät (16), das zumindest eine Netzleitstellengerät (18a, 18b) zur Verarbeitung von die Elektroenergiequalität des elektrischen Energieversorgungsnetzes (11) angebenden Elektroenergiequalitätsdaten eingerichtet sind;
**dadurch gekennzeichnet, dass**
- der Kommunikationsbus (15) und die Leitstellenkommunikationsverbindung (17) zur Übertragung der Elektroenergiequalitätsdaten nach einem zweiten Kommunikationsprotokoll, das von dem ersten Kommunikationsprotokoll verschieden ist, oder einem zweiten Datenübertragungsdienst des bestimmten Kommunikationsprotokolls, der von dem ersten Datenübertragungsdienst verschieden ist, derart eingerichtet sind, dass die Elektroenergiequalitätsdaten zwischen den Feldgeräten (14), dem zumindest einen Stationsleitgerät (16) und dem zumindest einen Netzleitstellengerät (18a, 18b) nach dem zweiten Kommunikationsprotokoll oder dem zweiten Datenübertragungsdienst des bestimmten Kommunikationsprotokolls übertragen werden.

2. Energieautomatisierungssystem (10) nach Anspruch 1,
**dadurch gekennzeichnet, dass**
- die Betriebsführungsdaten über den Kommunikationsbus (15) und die Leitstellenkommunikationsverbindung (17) mit einer höheren Priorität übertragen werden als die Elektroenergiequalitätsdaten.

3. Energieautomatisierungssystem (10) nach Anspruch 1 oder 2,
**dadurch gekennzeichnet, dass**
- die Feldgeräte (14), das zumindest eine Stationsleitgerät (16), das zumindest eine Netzleitstellengerät (18a, 18b) auch zur Verarbeitung von eine Störung in dem elektrischen Energieversorgungsnetzes (11) angebenden Störschriebdaten eingerichtet sind und
- der Kommunikationsbus (15) und die Leitstellenkommunikationsverbindung (17) auch zur Übertragung der Störschriebdaten nach einem dritten Kommunikationsprotokoll, das von dem ersten und dem zweiten Kommunikationsprotokoll verschieden ist, oder einem dritten Datenübertragungsdienst des bestimmten Kommunikationsprotokolls, der von dem ersten und dem zweiten Datenübertragungsdienst verschieden ist, eingerichtet sind.

4. Energieautomatisierungssystem (10) nach Anspruch 3,
**dadurch gekennzeichnet, dass**
- die Betriebsführungsdaten über den Kommunikationsbus (15) und die Leitstellenkommunikationsverbindung (17) mit einer höheren Priorität übertragen werden als die Störschriebdaten, und
- die Störschriebdaten über den Kommunikationsbus (15) und die Leitstellenkommunikationsverbindung (17) mit einer höheren Priorität übertragen werden als die Elektroenergiequalitätsdaten.

5. Energieautomatisierungssystem (10) nach einem der vorangehenden Ansprüche,
**dadurch gekennzeichnet, dass**
- die Feldgeräte (14) zur Erfassung von Messwerten und zum Ermitteln der Elektroenergiequalitätsdaten aus den Messwerten eingerichtet sind, indem die Messwerte und/oder von den Messwerten abgeleitete Werte über einen vorgegebenen Zeitraum fortlaufend abgespeichert werden, und
- die Feldgeräte (14) zur Übertragung des Verlaufs der Messwerte und/oder der abgeleiteten Werte als Elektroenergiequalitätsdaten blockweise über den Kommunikationsbus (15) eingerichtet sind.

6. Energieautomatisierungssystem (10) nach einem der vorangehenden Ansprüche,
**dadurch gekennzeichnet, dass**
- die Feldgeräte (14) dazu eingerichtet sind, die Betriebsführungsdaten unverzüglich über den Kommunikationsbus (15) zu übertragen und/oder über den Kommunikationsbus empfangene Betriebsführungsdaten unverzüglich an das elektrische Energieversorgungsnetz (11) weiterzuleiten.

7. Energieautomatisierungssystem (10) nach einem der vorangehenden Ansprüche,
**dadurch gekennzeichnet, dass**
- mit dem Kommunikationsbus (15) und/oder der Leitstellenkommunikationsverbindung (17) eine Datenspeichereinrichtung (19) in Verbindung steht, die zum Empfang und zum Abspeichern der Elektroenergiequalitätsdaten eingerichtet ist.

## Claims

1. Power automation system (10) for operating and observing an electrical power supply system (11) comprising
- electrical field devices (14) which, on the one hand, are connected to sensors (12) arranged at the electrical power supply system (11) for detecting measured values and, on the other hand, to a higher-order communication bus (15);
- at least one electrical station control device (16) which, on the one hand, is connected to the communication bus (15) and, on the other hand, to a higher-order control center communication link (17); and
- at least one electrical system control center device (18a, 18b) which is connected to the control center communication link (17); wherein
- the field devices (14), the at least one station control device (16) and the at least one system control center device (18a, 18b) are equipped for processing operation management data necessary for operating and observing the electrical power supply system (11) and the communication bus (15) and the control center communication link (17) are equipped for transmitting the operation management data in accordance with a first communication protocol or a first data transmission service of a particular communication protocol in such a way that the operation management data are transmitted between the field devices (14), the at least one station control device (16) and the at least one system control center device (18a, 18b) in accordance with the first communication protocol or the first data transmission service of the particular communication protocol;
wherein
- the field devices (14), the at least one station control device (16), the at least one system control center device (18a, 18b) are equipped for processing electrical power quality data specifying the electrical power quality of the electrical power supply system (11);
**characterized in that**
- the communication bus (15) and the control center communication link (17) are equipped for transmitting the electrical power quality data in accordance with a second communication protocol, which is different from the first communication protocol, or a second data transmission service of the particular communication protocol which is different from the first data transmission service, in such a way that the electrical power quality data are transmitted between the field devices (14), the at least one station control device (16) and the at least one system control center device (18a, 18b) in accordance with the second communication protocol or the second data transmission service of the particular communication protocol.

2. Power automation system (10) according to Claim 1,
**characterized in that**
- the operation management data are transmitted via the communication bus (15) and the control center communication link (17) with a higher priority than the electrical power quality data.

3. Power automation system (10) according to Claim 1 or 2,
**characterized in that**
- the field devices (14), the at least one station control device (16), the at least one system control center device (18a, 18b) are also equipped for processing fault recording data specifying a disturbance in the electrical power supply system (11), and
- the communication bus (15) and the control center communication link (17) are also equipped for transmitting the fault recording data in accordance with a third communication protocol which is different from the first and the second communication protocol, or a third data transmission service of the particular communication protocol which is different from the first and the second data transmission service.

4. Power automation system (10) according to Claim 3,
**characterized in that**
- the operation management data are transmitted via the communication bus (15) and the control center communication link (17) with a higher priority than the fault recording data, and
- the fault recording data are transmitted via the communication bus (15) and the control center communication link (17) with a higher priority than the electrical power quality data.

5. Power automation system (10) according to one of the preceding claims,
**characterized in that**
- the field devices (14) are equipped for detecting measured values and for determining the electrical power quality data from the measured values **in that** the measured values and/or values derived from the measured values are continuously stored over a predetermined period of time, and
- the field devices (14) are equipped for the block transmission of the sequence of the measured values and/or of the derived values as electrical power quality data via the communication bus (15).

6. Power automation system (10) according to one of the preceding claims,
**characterized in that**
- the field devices (14) are equipped for transmitting the operation management data immediately via the communication bus (15) and/or forwarding operation management data received via the communication bus immediately to the electrical power supply system (11).

7. Power automation system (10) according to one of the preceding claims,
**characterized in that**
- a data storage device (19) is connected to the communication bus (15) and/or the control center communication link (17), which data storage device is equipped for receiving and storing the electrical power quality data.

## Revendications

1. Système (10) d'automatisation énergétique pour commander et observer un réseau (11) d'alimentation en énergie électrique, comprenant
- des appareils (14) électriques sur site, qui sont en liaison, d'une part, pour la détection de valeurs de mesure, avec des capteurs (12), disposés sur le réseau (11) d'alimentation en énergie électrique, et d'autre part, avec un bus (15) de communication supérieur hiérarchiquement ;
- au moins un appareil (16) directeur de poste électrique, qui est en liaison d'une part avec le bus (15) de communication et d'autre part avec une liaison (17) de communication de point directeur supérieure hiérarchiquement ; et
- au moins un appareil (18a, 18b) électrique de point directeur de réseau, qui est en liaison avec la liaison (17) de communication de point directeur ; dans lequel
- les appareils (14) sur site, le au moins un appareil (16) directeur de poste et le au moins un appareil (18a, 18b) de point directeur de réseau sont conçus pour le traitement de données de conduite de fonctionnement nécessaires à la commande et à l'observation du réseau (11) d'alimentation en énergie électrique et le bus (15) de communication et la liaison (17) de communication de point directeur sont conçus pour la transmission des données de conduite de fonctionnement suivant un premier protocole de communication ou un premier service de transmission de données d'un protocole de communication défini, de sorte que les données de conduite de fonctionnement sont transmises entre les appareils (14) sur site, le au moins un appareil (16) directeur de poste et le au moins un appareil (18a, 18b) de point directeur de réseau suivant le premier protocole de communication ou le premier service de transmission de données du protocole de communication défini ;
dans lequel
- les appareils (14) sur site, le au moins un appareil (16) directeur de poste, le au moins un appareil (18a, 18b) de point directeur de réseau sont conçus pour le traitement de données de qualité d'énergie électrique indiquant la qualité de l'énergie électrique du réseau (11) d'alimentation en énergie électrique ;
**caractérisé en ce que**
- le bus (15) de communication et la liaison (17) de communication de point directeur sont conçus pour la transmission de données de la qualité d'énergie électrique suivant un deuxième protocole de communication, qui est différent du premier protocole de communication, ou suivant un deuxième service de transmission de données du protocole de communication défini, qui est différent du premier service de transmission de données, de manière à transmettre les données de qualité de l'énergie électrique entre les appareils (14) sur site, le au moins un appareil (16) directeur de poste et le au moins un appareil (18a, 18b) de point directeur de réseau suivant le deuxième protocole de communication ou suivant le deuxième service de transmission de données du protocole de communication défini.

2. Système (10) d'automatisation énergétique suivant la revendication 1,
**caractérisé en ce que**
- les données de conduite du fonctionnement sont transmises par le bus (15) de communication et la liaison (17) de communication de point directeur à une priorité plus grande que les données de qualité de l'énergie électrique.

3. Système (10) d'automatisation énergétique suivant la revendication 1 ou 2,
**caractérisé en ce que**
- les appareils (14) sur site, le au moins un appareil (16) directeur de poste, le au moins un appareil (18a, 18b) de point directeur de réseau sont conçus également pour le traitement de données écrites de perturbation indiquant le traitement d'une perturbation dans le réseau (11) d'alimentation en énergie électrique, et
- le bus (15) de communication et la liaison (17) de communication de point directeur sont conçus également pour la transmission des données écrites de perturbation suivant un troisième protocole de communication, qui est différent du premier et du deuxième protocole de communication, ou suivant un troisième service de transmission de données du protocole de communication défini, qui est différent du premier et du deuxième service de transmission de données.

4. Système (10) d'automatisation énergétique suivant la revendication 3,
**caractérisé en ce que**
- les données de conduite de fonctionnement sont transmises par le bus (15) de communication et par la liaison (17) de communication de point directeur à une priorité plus grande que les données écrites de perturbation, et
- les données écrites de perturbation sont transmises par le bus (15) de communication et par la liaison (17) de communication de point directeur à une priorité plus grande que les données de qualité de l'énergie électrique.

5. Système (10) d'automatisation énergétique suivant l'une des revendications précédentes,
**caractérisé en ce que**
- les appareils (14) sur site sont conçus pour la détection de valeurs de mesure et pour la détermination de données de qualité de l'énergie électrique à partir des valeurs de mesure, par le fait que les valeurs de mesure et/ou des valeurs déduites des valeurs de mesure sont mémorisées en continu sur un laps de temps donné à l'avance, et
- les appareils (14) sur site sont conçus pour la transmission de la courbe des valeurs de mesure et/ou des valeurs déduites comme données de qualité de l'énergie électrique, bloc par bloc, par le bus (15) de communication.

6. Système (10) d'automatisation énergétique suivant l'une des revendications précédentes,
**caractérisé en ce que**
- les appareils (14) sur site sont conçus pour transmettre les données de conduite de fonctionnement sans délai par le bus (15) de communication et/ou pour acheminer des données de conduite de fonctionnement reçues par le bus de communication, sans délai, au réseau (11) d'alimentation en énergie électrique.

7. Système (10) d'automatisation énergétique suivant l'une des revendications précédentes,
**caractérisé en ce que**
- est en liaison avec le bus (15) de communication et/ou avec la liaison (17) de communication de point directeur, un dispositif (19) de mémorisation de données conçu pour recevoir et pour mémoriser les données de qualité de l'énergie électrique.
